# EUROPÄISCHE PATENTSCHRIFT

(11) **EP 0 999 954 B1**
(45) Veröffentlichungstag und Bekanntmachung des Hinweises auf die Patenterteilung: **05.09.2001**
(21) Anmeldenummer: 98938696.6
(22) Anmeldetag: 21.07.1998
(51) Int. Cl.: B60R 16/02

(54) **POTENTIALVERTEILUNGSSYSTEM ZUR POTENTIALVERTEILUNG AN VERBRAUCHER SOWIE GEEIGNETER VERBINDER**
POTENTIAL DISTRIBUTION SYSTEM FOR THE POTENTIAL DISTRIBUTION TO CONSUMERS AND SUITED CONNECTORS
SYSTEME DISTRIBUTEUR DE TENSION DESTINE A LA DISTRIBUTION DE TENSION A DES CONSOMMATEURS ET CONNECTEURS ADAPTES

(30) Priorität: 30.07.1997 DE 19732697
(43) Veröffentlichungstag der Anmeldung: 17.05.2000
(73) Patentinhaber: DaimlerChrysler AG, 70567 Stuttgart (DE)
(72) Erfinder: MÄCKEL, Rainer, D-56639 Königswinter (DE); SCHULZ, Thomas, D-72669 Unterensingen (DE); KOMANDER, Gerhard, D-73773 Aichwald (DE)
(74) Vertreter: Maute, Hans-Jürgen, Dipl.-Ing.
(86) Internationale Anmeldenummer: EP9804572
(87) Internationale Veröffentlichungsnummer: WO9906242

(56) Entgegenhaltungen:
- EP-A- 0 385 202
- CH-A- 654 696
- DE-U- 9 409 725
- DE-U- 29 520 691
- DE-U- 29 621 319
- US-A- 4 148 540
- US-A- 4 237 441

## Beschreibung

Die Erfindung betrifft ein Potentialverteilungssystem zur Potentialverteilung an Verbraucher, insbesondere in Kraftfahrzeugen, sowie einen geeigneten Verbinder.

Die Zahl der elektrischen Verbraucher in Kraftfahrzeugen nimmt standig zu. Bei einer größeren Variantenvielfalt wegen Sonderausstattungen und dergleichem bedeutet dies, daß für unterschiedliche Ausstattungsvarianten entweder jeweils unterschiedlich ausgelegte, optimal dimensionierte Kabelbaume in einem Fahrzeug vorzusehen sind oder für alle Ausstattungsvarianten ein für eine maximale Verbraucherzahl ausgelegter Kabelbaum vorzusehen ist, der jeweils nur teilweise benutzt wird. Um die Variantenvielfalt im Kabelsatz nicht zu groß werden zu lassen, werden dabei Kabel, Stützpunkte, Sicherungssteckplätze bzw Sicherungen teilweise vorgehalten, obwohl sie in einem Teil der Fahrzeuge nicht benötigt werden.

Ein weiteres Problem stellt die Variantenvielfalt bzgl. Rechts- und Linkslenkerfahrzeuge dar. Da beispielsweise eine Sicherungsdose je nach Ländervariante auf der linken bzw. auf der rechten Seite im Kfz untergebracht ist. werden damit jeweils unterschiedliche Leitungssatze benötigt

Hierdurch wird der Aurwand für Verkabelung und Absicherung der Verbraucher immer größer. Heute werden zur Absicherung von Verbrauchern und Leitungen Schmelzsicherungen eingesetzt. die aus Grunden der Handhabbarkeit in einer begrenzten Anzahl von zentralen Sicherungsdosen angeordnet sind. Die Sicherungen müssen nach einem Fehlerfall vom Benutzer des Fahrzeuges ausgetauscht werden können. Aus diesem Grund mussen die Sicherungsdosen, in denen die Sicherungen angeordnet sind, für den Benutzer zugänglich im Fahrzeug angebracht werden Dies erhöht den Verkabelungsaufwand weiter, da alle Kabel zu diesen Dosen hingeführt und von dort zu den elektrischen Lasten weitergeführt werden müssen.

Hinzu kommt, daß der Ausstattungsgrad eines Fahrzeuges mit elektrischen Verbrauchern, Steuer- und/oder Regeleinrichtungen mehr oder weniger Kabel bzw. Sicherungen bedingt, d.h. für jede Austattungsvariante müßte eigentlich ein optimaler Kabelsatz erstellt werden. Dies ist sowohl aus entwicklungstechnischen, produktionstechnischen wie auch logistischen Gründen nicht möglich.

Aus der GB 2 268 637 ist eine zentrale Versorgungsleitung vorgesehen, bei der an Verbindern mit vorbestimmten Steckerplätzen Baugruppen angeschlossen werden können. Hierzu muß bei einer geforderten Variantenvilefalt eine große Zahl an oft ungenutzten Steckerplatzen vorgehalten werden. Die elektrische Absicherung muß über eine Zentralsicherung gewährleistet werden.

Aus DE 40 15 816 C2 ist ein Kabelsatz bekannt, der eine dezentrale Anordnung von Sicherungen ermoglicht, Dabei werden Sicherungen in einem fest mit dem Kabelsatz verbundenen Verbinder integriert. Die Verbinder sind als sternfromig verteilte Unterverteiler an fest vorgegebenen Plätzen vorgesehen, von denen eine durch Steckerkontakte fest vorgegebene Anzahl an anschließbaren Leitungen abzweigt. Die in den Unterverteilern vorgesehenen Sicherungen stellen sich im Gegensatz zu konventionellen Schmelzsicherungen, die nach dem Auslosen getauscht werden müssen, selbstandig wieder zurück. Durch die Absicherung in den Unterverteilern kann zwar der Verkabelungsaufwand verringert werden, das Vorhalten von Leitungen. Steckkontakten und Sicherungen auf Grund der Variantenvielfalt kann damit aber nicht beseitigt werden.

Die Schneid - Klemm - Verbindungstechnik, bei der mittels einer elektrisch leitfähigen Schneiden ein isoliertes Kabel kontaktiert wird, indem die Isolation durchtrennt und das so abisolierte Kabel zwischen den Schneiden durch Klemmung gehalten wird, ist bisher für Datenbussysteme bekannt, wie beispielsweise aus der DE 44 13 977 zu entnehmen.

Aus der gattungsbildenden CH.654 696 A5 ist eine Vorrichtung zur Halterung und Anzapfung eines Bandkabels bekannt, die auch als Potentialverteilungssystem eingesetzt werden kann. Ein Verbinder zum Verbinden eines Verbrauchers über eine Verbindungsleitung mit einer Versorgungsleitung wird mittels einer Klemmverbindung an einer frei wählbaren Stelle der Versorgungsleitung angeschlossen. In dem Verbinder ist ein nicht reversibles Sicherungselement für den angeschlossenen Verbraucher enthalten. Außerdem benötigt der Verbinder eine mindestens zweiadrige Versorgungsleitung, während die erfindungsgemäße Potentialverteilung und der erfindungsgemäße Verbinder auch für einadrige Versorgungsleitungen eingesetzt werden kann und deshalb insbesondere zur Anwendung in Kraftfahrzeugen geeignet ist.

Der Erfindung liegt die Aufgabe zugrunde, ein einfach zu montierendes Potentialverteilungssystem. insbesondere in Kraftfahrzeugen, sowie einen geeigneten Verbinder dazu zu schaffen, der eine große Flexibilitat beim Integrieren von verschiedenen Verbrauchern in ein Bordnetz ermöglicht.

Die Aufgabe wird durch die kennzeichnenden Merkmale des ersten Anspruchs gelöst. Weiterfuhrende und vorteilhafte Ausgestaltungen sind den Unteransprüchen und der Beschreibung zu entnehmen.

Die Erfindung besteht darin, den Kabelbaum, bzw. einen Teilkabelbaum, durch eine durchgehende, in weiten Bereichen eines mit Verbrauchern bestückten Körpers verlegte zentrale Versorgungsleitung zu ersetzen, an welcher an frei wählbaren Stellen mittels einer Klemmvorrichtung ein Verbinder angeklemmt ist, der mit einer integrierten, selbst rucksetzenden Sicherungseinrichtung ausgestattet ist. Besonders bevorzugt erfolgt die Anklemmung dies mittels einer Schneid-Klemmverbindung, wobei grundsätzlich auch eine unisolierte Potentialverteilerschiene durch ein einfaches Anklemmen des Verbinders kontaktiert werden kann. Durch das Potentialverteilungssystem wird eine schnelle und individuelle Absicherung der einzelnen Verbraucher ermöglicht, da die zentrale Versorgungsleitung beispielsweise nur gegen einen direkten Masseschluß abgesichert werden sollte, die einzelnen Verbraucher jedoch individuell über ihre Verbinder abgesichert sind, so daß mittels einiger Typen von Verbindern unterschiedlicher Sicherungsleistung alle möglichen Verbraucher unterschiedlicher Last angeschlossen werden können. Eine standige Anpassung der zentralen Absicherung entfallt. Auch der nachtragliche Einbau zusätzlicher Verbraucher ist völlig unproblematisch. da dieser an einer noch unbelegten frei wählbaren Stelle der Versorgungsleitung angeschlossen und über das im Verbinder integrierte Sicherungselement abgesichert ist Die Sicherungsvorrichtung leitet unter Normalbetriebsbedingungen Strom zu den angeklemmten Verbraucherleitungen und wird bei Überstrom hochohmig. Vorzugsweise sind die Verbraucherleitungen in der Kabelverbindervorrichtung über eine einzige Sicherungsvorrichtung mit dem Kabelstrang elektrisch verbunden. Eine weitere bevorzugte Ausführung ist, die Leitungen zu den Verbrauchern in der Kabelverbindervorrichtung einzeln oder in Gruppen abzusichern.

Im folgenden sind die Merkmale, soweit sie für die Erfindung wesentlich sind, eingehend erläutert und anhand von Figuren naher beschrieben.

Es zeigen:
- Fig. 1: eine erfindungsgemaße Anordnung,
- Fig. 2: eine abgewandelte erfindungsgemaße Anordnung,
- Fig. 3a: eine Draufsicht auf den Deckel eines erfindungsgemaßen Verbinders,
- Fig. 3b: eine schematische Seitenansicht auf die Leiter eines erfindungsgemäßen Verbinders,
- Fig. 4: eine erste Schnittansicht des Verbinders,
- Fig. 5: eine weitere Schnittansicht des Verbinders,
- Fig. 6: eine weitere Schnittansicht des Verbinders.

Erfindungsgemäß wird ein Verbinder bedarfsgerecht an eine eine zentrale Versorgungsleitung an einem frei wählbaren Ort angeschlossen, der räumlich günstig zu einem oder mehreren zu versorgenden und/oder zu steuernden Verbraucher liegt. Die Zahl der anzuschließenden Leitungen an die zentrale Versorgungsleitung kann dem Bedarf angepaßt werden. Dabei braucht der als durchgehende elektrische Leitung ausgebildete zentrale Versorgungsleitung nicht aufgetrennt zu werden.

Es ist mindestens ein sich selbst ruckstellendes Sicherungselement mechanisch und elektrisch in den Verbinder integriert. Der besondere Vorteil ist. daß keine zentralen Sicherungsdosen mehr notwendig sind, wobei für spezielle Anwendungen, beispielweise für eine Absicherung egegen einen direkten Massekurzschluß der Versorgungsleitung, diese jedoch auch vorhanden sein konnen. Eine anpassung an die Anzahl der Verbraucher ist jedoch nicht erforderlich. Vorteilhafterweise kann ein erfindungsgemaßer Verbinder länderunabhangig in einen vorhandenen Leitungssatz integriert werden.

Eine einfache und schnelle Montage des Verbinders, sowie eine sichere elektrische Verbindung mit dem Verbinder ist möglich, indem die Verbindung zur zentralen Versorgungsleitung wie auch die Verbindung mit den zu den elektrischen Lasten führenden Leitungen bevorzugt in der sogenannten Schneid-Klemm-Technik ausgeführt werden. Besonders bevorzugt ist, eine etwaige Kabelisolierung jeweils mit zwei metallischen Schneiden aufzutrennen und die elektrische Verbindung zwischen eingelegtem Leiter und Versorgungsleitung über die metallischen Schneiden herzustellen. Vorzugsweise sind jeweils zwei Schneiden auf jeder Seite eines eingelegten Leiters paarweise gegenüberliegend angeordnet. Es ist jedoch auch möglich, die Verbindung mittels einer anderen Kontaktierungstechnik zu Stichleitungen wie auch zur zentralen Versorgungsleitung herzustellen.

Es ist auch möglich, eine Ankopplung von Verbrauchern an zwei zentrale Versorgungsleitungen zu ermöglichen, die insbesondere das elektrische Potential einer Phase, Nulleiter, Klemme 30, Klemme 15 führen. Bei der Ankopplung an zwei Versorgungsspannungen sind die Abgriffe der Spannung vorteilhafter Weise einzeln absicherbar. Bei einer Ankopplung an ein Phase/Nulleitersystem ist es ausreichend, nur ein Sicherungselement zum Absichern eines Verbrauchers vorzusehen

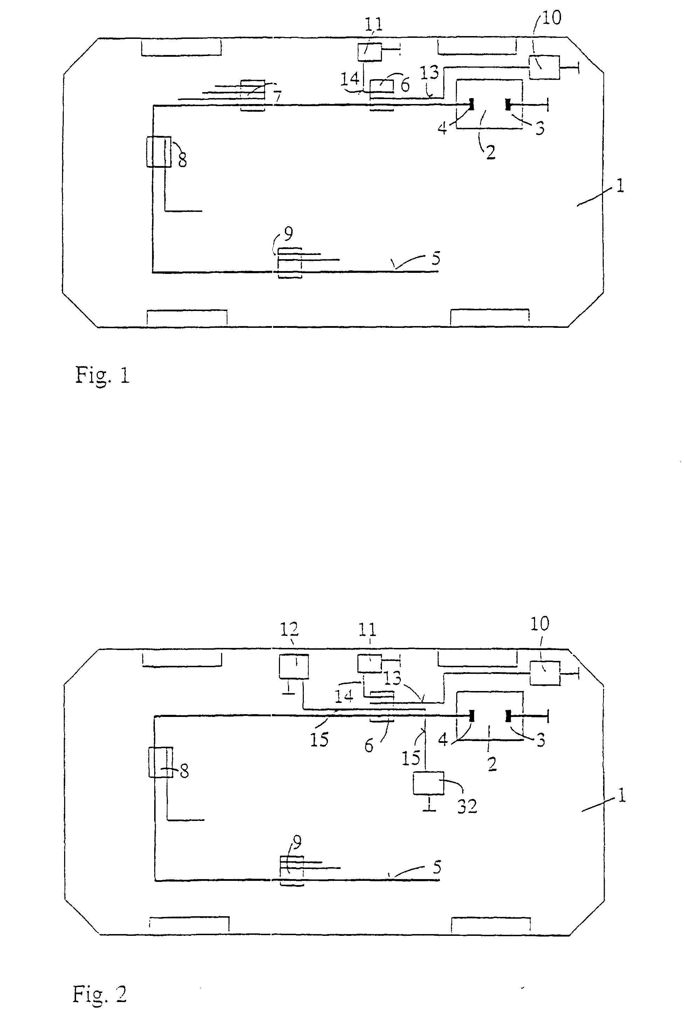

In Fig. 1 ist schematisch eine Verkabelungsstruktur in einem als Kraftfahrzeug ausgebildeten Körper dargestellt. In dem Fahrzeug 1 ist eine Fahrzeugbatterie 2 mit zwei Polen 3 und 4 vorgesehen und mit ihrem einen Pol 4 elektrisch an eine zentrale Versorgungsleitung 5 angeschlossen. Vorzugsweise ist der erste Pol 3 ein Masseanschluß und der zweite Pol 4 ein Pluspol.

Bei der zentrale Versorgungsleitung 5 handelt es sich vorzugsweise um eine isolierte, durchgehende elektrische Leitung, die in weiten Bereichen durch das Fahrzeug 1 verlegt ist Der besondere Vorteil ist, daß kein komplizierter Kabelbaum verlegt werden muß, sondern eine einzelne Leitung diesen ersetzt, an die an beliebiger Stelle ein Verbinder angelegt werden kann. Vorzugsweise ist die zentrale Versorgungsleitung ausreichend dimensioniert, so daß er einen hohen Strom für eine Mehrzahl von Verbrauchern tragen kann. Bei unterschiedlichen Ausstattungsvarianten mit elektrischen Verbraucher muß lediglich die Zahl der Verbinder angepaßt werden. Der Anschlußort der notwendigen Verbinder kann vorteilhafter Weise nach der günstigsten Anordnung für die vorgesehenen Verbinder gewählt werden.

An der zentralen Versorgungsleitung 5 sind demnach eine Mehrzahl von Verbindern 6, 7, 8, 9 an verschiedenen Stellen im Fahrzeug 1 und mit verschiedener Anzahl von Leitungen angeschlossen. Der Verbinder 6 versorgt Verbraucher 10 und 11 mit Spannung. Dazu sind getrennte Stichleitungen 13 und 14 zwischen den Verbrauchern 10. 11 und dem Verbinder 6 angeordnet und im Verbinder 6 über Kontaktvorrichtungen 18, 19, 20, 21, 24, 25, 26, 22 und ein oder gegebenenfalls mehrere Sicherungselemente 23 an die zentrale Versorgungsleitung 5 elektrisch angeschlossen. Etwaige andere Verbraucher, die von anderen Verbindern 7, 8, 9 versorgt werden, sind nicht eingezeichnet.

In Fig. 2 ist eine weitere Ausgestaltung der Erfindung dargestellt. Die Anordnung entspricht weitgehend der Anordnung aus Fig. 1. Der Verbinder 6 versorgt neben den Verbrauchern 10, 11 noch zwei weitere Verbraucher 12 und 32 über eine gemeinsame eigene Leitung 15, die in ihrem mittleren Bereich im Verbinder 6 über eine eigene Kontaktvorrichtung 21 mit der Versorgungsleitung 5 kontaktiert ist und deren Enden je an einem der Verbraucher 12, 32 angeschlossen sind.

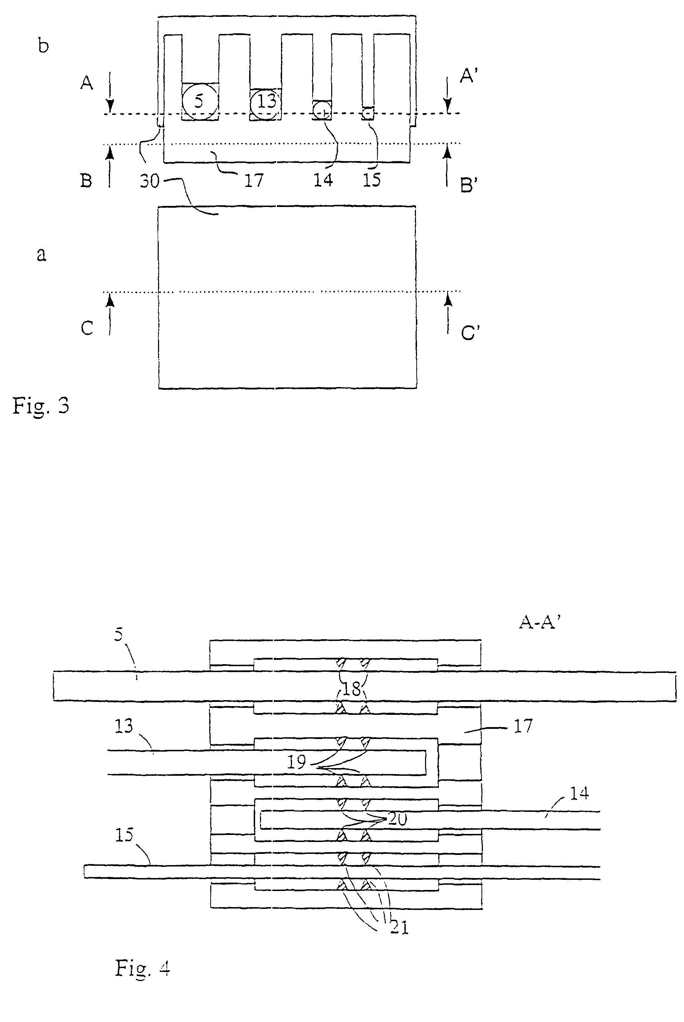

In Fig. 3a ist eine Draufsicht auf den Gehausedeckel eines erfindungsgemaßen Verbinders dargestellt. In Fig. 3b ist ein Schnitt durch eine bevorzugte Ausführung des Verbinders gemaß der Erfindung dargestellt. Die schematische Darstellung in der Figur zeigt einen Schnitt längs der Linie C-C' der Draufsicht auf einen Verbinder. Die Ansichten der Schnitte entlang A-A' und B-B' sind in den Figuren 4-6 dargestellt. Die zentrale Versorgungsleitung 5 und die Verbindungsleitungen 13, 14, 15 sind parallel zueinander im Verbinder angeordnet und liegen vorzugsweise in geeignet geformten Vertiefungen eines Gehäuseunterteils 17 Das Gehäuseunterteil 17 ist mit einem Dekkel 30 verschlossen Vorzugsweise ist das Gehäuseunterteil 17 und/oder der Deckel aus einem elektrischen Isoliermaterial, insbesondere einem Duroplast oder einem Thermoplast gebildet. Eine weitere zweckmaßige Ausbildung besteht darin, den Verbinder, insbesondere Deckel (30) und/oder Gehäuseunterteil (17), mit einer metallischen Hülle zu versehen, die gegen elektrische Kontaktmittel und Leitungen im Innern des Gehäuses isoliert ist.

In Fig. 4 ist die Draufsicht ohne Deckel in der Schnittebene A-A' dargestellt. Die metallischen Schneiden 18 einer Kontaktvorrichtung kontaktieren die zentrale Versorgungsleitung 5. Die Verbindungsleitungen sind durch die metallischen Schneiden 19, 20, 21 weiterer integrierter Kontaktvorrichtungen kontaktiert. Vorzugsweise bestehen die Schneiden 18, 19, 20, 21 aus zwei mal zwei jeweils sich gegenuberliegenden einzelnen Schneidkanten Die Schneiden durchschneiden eine etwaige Isolierung einer zu kontaktierenden Kabels und gewährleisten eine innige metallischen Verbindung zwischen Schneide und Kabelseele.

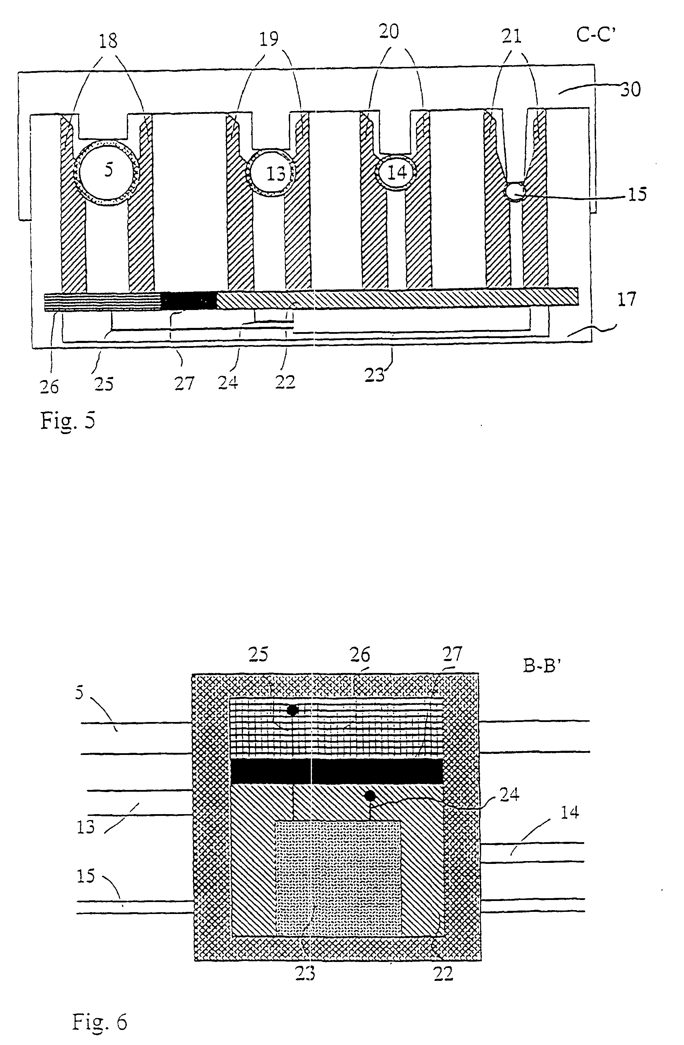

Zwischen den benachbarten Schneidkanten auf einer Seite des Drahtes befindet sich ein Zwischenraum, der sich vorzugsweise nach unten Richtung Gehäuseunterteil 17 verjüngt. Dies ist in Fig. 5 dargestellt. Dort ist eine Seitenschnittansicht auf Leiter und Schneiden in der Schnittebene C-C' skizziert. Je nach Durchmesser eines zu kontaktierenden Kabels ist der Zwischenraum zweckmaßigerweise verschieden groß.

In einer bevorzugten Ausführung sind die Schneiden 19, 20, 21 durch ein leitendes Verbindungsstück 22 elektrisch miteinander verbunden. Die zentrale Versorgungsleitung 5 ist in diesem Ausführungsbeispiel durch ein isolierendes Zwischenstück 27 von den Schneiden 19, 20, 21 und dem Verbindungselement 22 entkoppelt. Vorzugsweise ist das Gehauseunterteil 17 so geformt, daß sowohl beim Schneiden als auch beim späteren Klemmen eine ausreichende Gegenkraft auf das jeweilige zu kontaktierende Kabel ausgeübt werden kann, um eine sichere Kontaktierung des Kabels über die Schneiden zu gewährleisten.

Die Schneiden 18, die die zentrale Versorgungsleitung 5 kontaktieren, sind mit einem Leiterstück 26 im unteren Bereich der Kabelaufnahme der zentralen Versorgungsleitung 5 elektrisch leitend verbunden.

Durch ein sich nach einem Fehlerfall, insbesondere bei Uberstrom, selbst ruckstellendes Sicherungselement 23 wird eine abgesicherte elektrischen Verbindung zwischen der zentrale Versorgungsleitung 5 und den Verbindungsleitungen 13, 14, 15 hergestellt. Das Sicherungselement 23 weist zwei Anschlusse 24, 25 auf. Der Anschluß 25 des Sicherungselements 23 ist mit dem elektrisch leitenden Element 26, welches mit den Schneiden 18 zur zentralen Versorgungsleitung 5 verbunden ist, in Verbindung. Der Anschluß 24 ist mit dem elektrisch leitenden Verbindungselement 22, welches die Schneiden 19, 20, 21 kontaktiert, in Verbindung. Das Sicherungselement 23 ist in etwa parallel zu dem Verbindungselement 22 angeordnet. Vorzugsweise ist das Sicherungselement 23 aus einem kohlenstoffhaltigen Polymer gebildet. Bei Normalbedingungen ist das Polymer niederohmig und kann einen ausreichenden Strom tragen. Fließt ein zu hoher Strom, envarmte sich das Polymer und wird hochohmig. Es fließt ein geringer Reststrom im Fehlerfall, der noch ausreicht, um das Polymer hochohmig zu halten. Bei Wegfall des Fehlers kühlt das Polymer wieder ab und wird wieder niederohmig

Um eine schnelle Montage und eine sichere elektrische und mechanische Verbindung zu gewährleisten, wird der Deckel 30 auf das Gehäuseunterteil 17 aufgesetzt. Mit Hilfe von an der Deckelunterseite angeordneten Zapfen werden zentrale Versorgungsleitung 5 und Verbindungsleitungen 13, 14, 15 bei der Montage in den für die Kabelaufnahme vorgesehenen Zwischenraum der Schneiden gedrückt. Hierbei wird durch die Schneiden die etwaige Isolierung der Kabel durchtrennt und eine elektrische Verbindung hergestellt. Die Länge der Zapfen bestimmt die Tiefe, bis zu welcher die Kabel in die Zwischenräume hineingedrückt werden.

Eine vorteilhafte Ausgestaltung besteht darin, daß die Schneiden in den für die Kabelaufnahme vorgesehenen Zwischenraumen nicht parallel verlaufen, sondern v-förmig ihren Abstand voneinander verringern. Diese Ausgestaltung ist nicht in einer Skizze dargestellt. Vorzugsweise sind die Zapfen mit Federn mit dem Deckel verbunden. Zweckmäßigerweise können die Zapfen gleich lang sein. Der Vorteil ist, daß Kabel mit unterschiedlichen Durchmessern in die zur Kabelaufnahme vorgesehenen Zwischenräume gepreßt werden können. ohne daß bei Zapfen oder Schneiden unterschiedliche Geometrien oder Abmessungen vorzusehen sind.

In Fig. 6 ist ein Schnitt B-B' durch den Gehäuseboden dargestellt. Die elektrische Kontaktfläche 26 zur zentralen Versorgungsleitung 5 ist mit dem Anschluß 25 des Sicherungselements 23 verbunden und der Anschluß 24 des Sicherungselements 23 ist mit dem elektrischen Kontakt 22 der Verbindungsleitungen 13, 14, 15 verbunden. Das isolierende Zwischenstück 27 trennt die elektrische Verbindung zwischen zentraler Versorgungsleitung 5 und Verbindungsleitungen 13, 14, 15. Es ist auch moglich. die Verbindungsleitungen 13, 14, 15 jeweils einzeln im Verbinder abzusichern und nicht gemeinsam mit einem einzigen Sicherungselement 23, wie in den Figuren dargestellt ist. Das Sicherungselement 23 ist flächig ausgebildet und vorzugsweise isoliert gegenuber dem Verbindungselement 22 auf dessen Unterseite angeordnet. Im Normalbetneb fließt der Versorgungsstrom von der zentralen Versorgungsleitung 5 uber die Schneiden 18 in das Element 26 und von dort uber den Anschluß 25 durch das Sicherungselement 23 und dessen Anschluß 24 in das Verbindungelement 22 und von dort uber die Schneiden 19, 20, 21 in die jeweiligen Verbindungleitungen 13, 14, 15 und die daran angeschlossenen Verbraucher. Im Fehlerfall, insbesondere bei zu hohem Stromfluß, wird das Sicheruneselement 23 hochohmig und der Stromfluß in die Verbraucher wird unterbrochen.

Die erfindungsgemäße Anordnung ermöglicht eine hohe Flexibilität bei der Auslegung der elektrischen Versorgung, insbesondere in Fahrzeugen. Die Verkabelung ist einfach, es ist kein aufwendiger, für einzelne Ausstattungsvarianten optimierter Kabelbaum notwendig. Die Notwendigkeit der Rückführung von Leitungen vom Verbraucher zu zentralen Sicherungsdosen kann vollständig entfallen, wenn ausschließlich eine dezentrale Absicherung der Verbraucher mittels der Verbinder vorgesehen ist.

## Patentansprüche

1. Potentialverteilungsystem zur Potentialverteilung an Verbraucher, die in einem Körper, insbesondere einem Kraftfahrzeug, verteilt angeordnet sind, wobei eine zentrale Versorgungsleitung (5) im Körper verlegt ist, und Verbinder (6, 7, 8, 9) zum Verbinden eines Verbrauchers über wenigstens eine Verbindungsleitung (13, 14, 15) mit der Versorgungsleitung (5) vorgesehen sind, die mittels einer Klemmvorrichtung an einer frei wählbaren Stelle der Versorgungsleitung (5) angeschlossen sind,
**dadurch gekennzeichnet**,
daß jeder Verbinder (6, 7, 8, 9) ein sich selbst rückstellendes elektrisches Sicherungselement (23) für den angeschlossenen Verbraucher aufweist.

2. Potentialverteilungssystem nach Anspruch 1, **dadurch gekennzeichnet, daß** der Verbinder (6, 7, 8, 9) mit der Versorgungsleitung (5) mit einer Schneid-Klemmvorrichtung verbunden ist.

3. Potentialverteilungssystem nach Anspruch 1 oder 2. **dadurch gekennzeichnet,** daß die Klemmvorrichtung wieder lösbar ist.

4. Potentialverteilungssystem nach Anspruch 1, 2 oder 3, **dadurch gekennzeichnet,** daß an den jeweils einen Verbinder (6, 7, 8, 9) mehrere Verbindungsleitungen (13, 14, 15) anschließbar sind.

5. Potentialverteilungssystem nach Anspruch 4. **dadurch gekennzeichnet,** daß die Verbindungsleitungen (13, 14, 15) im Verbinder (6. 7, 8, 9) einzeln mit einzeln zugeordneten Sicherungselementen abgesichert sind.

6. Potentialverteilungssystem nach Anspruch 4, **dadurch gekennzeichnet.** daß die Verbindungsleitungen (13, 14, 15) im Verbinder (6, 7, 8, 9) in Gruppen mit der Gruppe zugeordneten Sicherungselementen abgesichert sind.

7. Potentialverteilungssystem nach einem oder mehreren der vorangegangenen Ansprüche, **dadurch gekennzeichnet,** daß die Verbindungleitung(en) (13, 14, 15) ebenfalls mit Schneid-Klemmvorrichtung(en) mit dem Verbinder (6, 7, 8, 9) verbunden sind.

8. Potentialverteilungssystem nach einem oder mehreren der vorangegangenen Ansprüche. **dadurch gekennzeichnet**, daß mehrere Versorgungsleitungen (5) vorgesehen sind.

9. Verbinder (6, 7, 8, 9) zur Potentialverteilung an Verbraucher, die in einem Körper, insbesondere einem Kraftfahrzeug, verteilt angeordnet sind, wobei der Verbinder (6, 7, 8, 9) mittels einer Klemmvorrichtung an einer frei wählbaren Stelle einer Versorgungsleitung (5) angeschlossen ist,
**dadurch gekennzeichnet**, daß
der Verbinder (6, 7, 8, 9) ein sich selbst rückstellendes elektrisches Sicherungselement (23) für den angeschlossenen Verbraucher aufweist.

10. Verbinder (6, 7, 8, 9) nach Anspruch 9, **dadurch gekennzeichnet, daß** dieser mit der Versorgungsleitung (5) mit einer Schneid-Klemmvorrichtung verbunden ist.

11. Verbinder nach einem der vorangegangenen Ansprüche 9 oder 10, **dadurch gekennzeichnet, daß** das Sicherungselement (23) ein mit Kohlenstoff gefülltes Polymer aufweist.

12. Verbinder nach einem der vorangegangenen Ansprüche 9 bis 11, **dadurch gekennzeichnet, daß** das Sicherungselement (23) ein Bimetall-Element ist.

13. Verbinder nach einem der vorangegangenen Ansprüche 9 bis 12, **dadurch gekennzeichnet, daß** der Verbinder (6, 7, 8, 9) aus einem Gehäuse mit einem Dekkel (30) und einem Gehäuseunterteil (17) gebildet ist, wobei im Gehäuseunterteil (17) paarweise sich gegenüberstehende metallische Schneiden (18, 19, 20, 21) in zur Kabelaufnahme vorgesehenen Einkerbungen angeordnet sind und die Schneiden (18, 19. 20, 21) jeweils mit einem oder mehreren Metallverbindungsstücken (26, 22) in elektrischem Kontakt sind, wobei die mit dem Potentialverteiler in Verbindung stehenden Schneiden (18) und deren zugeordnetes Verbindungsstück (26) von dem oder den Verbindungsstücken (22) der Verbindungleitungen (13, 14, 15) elektrisch isoliert und über das Sicherungselement (23) miteinander verbunden sind und im Deckel Zapfen zum Hineindrücken der Kabel zwischen die Schneiden (18, 19, 20, 21) vorgesehen sind.

14. Verbinder nach einem der vorangegangenen Ansprüche 9 bis 13, **dadurch gekennzeichnet, daß** der Deckel (30) und/oder das Gehäuseunterteil (17) aus einem Kunststoffmaterial gebildet sind.

15. Verbinder nach einem der vorangegangenen Ansprüche 9 bis 14, **dadurch gekennzeichnet, daß** der Deckel (30) und/oder das Gehäuseunterteil (17) eine metallische Hülle aufweisen.

16. Verbinder nach einem der vorangegangenen Ansprüche 9 bis 15, **dadurch gekennzeichnet, daß** an den jeweils einen Verbinder (6, 7, 8, 9) mehrere Verbindungsieitungen (13, 14, 15) anschließbar sind.

17. Verbinder nach einem der vorangegangenen Ansprüche 9 bis 16, **dadurch gekennzeichnet, daß** die Verbindungsleitungen (13, 14, 15) im Verbinder (6, 7, 8, 9) einzeln mit einzeln zugeordneten Sicherungselementen abgesichert sind.

18. Verbinder nach einem der vorangegangenen Ansprüche 9 bis 16, **dadurch gekennzeichnet, daß** die Verbindungsleitungen (13, 14, 15) im Verbinder (6, 7, 8, 9) in Gruppen mit der Gruppe zugeordneten Sicherungselementen abgesichert sind.

19. Verbinder nach einem der vorangegangenen Ansprüche 9 bis 18, **dadurch gekennzeichnet, daß** die Verbindungleitung(en) (13. 14, 15) ebenfalls mit Schneid-Klemmvorrichtung(en) mit dem Verbinder (6, 7, 8, 9) verbunden sind.

## Claims

1. Potential distribution system for potential distribution to consumers, which are arranged distributed in a body, especially a motor vehicle, wherein a central supply line (5) is placed in the body and connectors (6, 7, 8) for connecting a consumer with the supply line (5) by way of at least one connecting line (13, 14, 15) are provided and are connected to a freely selectable point of the supply line (5) by means of a clamping device, **characterised in that** each connector (6, 7, 8, 9) comprises a self-resetting electrical protection element (23) for the connected consumer.

2. Potential distribution system according to claim 1, **characterised in that** the connector (6, 7, 8, 9) is connected with the supply line (5) by a cutting-clamping device.

3. Potential distribution system according to claim 1 or 2, **characterised in that** the clamping device is detachable again.

4. Potential distribution system according to claim 1, 2 or 3, **characterised in that** several connecting lines (13, 14, 15) are connectible to each connector (6, 7, 8, 9).

5. Potential distribution system according to claim 4, **characterised in that** the connecting lines (13, 14, 15) are protected in the connector (6, 7, 8, 9) individually by individually associated protection elements.

6. Potential distribution system according to claim 4, **characterised in that** the connecting lines (13, 14, 15) are protected in the connector (6, 7, 8, 9) in groups by protection elements associated with the group.

7. Potential distribution systern according to one or more of the preceding claims, **characterised in that** the connecting lines (13, 14, 15) are similarly connected with the connector (6, 7, 8, 9) by cutting-clamping devices.

8. Potential distribution system according to one or more of the preceding claims, **characterised in that** several supply lines (5) are provided.

9. Connector (6, 7, 8, 9) for potential distribution to consumers which are arranged distributed in a body, especially a motor vehicle, wherein the connector (6, 7, 8, 9) is connected to a freely selectable point of a supply line (5) by means of a clamping device, **characterised in that** the connector (6, 7, 8, 9) comprises a self-resetting electrical protection element (23) for the connected consumer.

10. Connector (6, 7, 8, 9) according to claim 9, **characterised in that** these are connected with the supply line (5) by a cutting-clamping device.

11. Connector according to claim 9 or 10, **characterised in that** the protection element (23) comprises a polymer filled with carbon.

12. Connector according to one of claims 9 to 11, **characterised in that** the protection element (3) is a bimetal element.

13. Connector according to one of claims 9 to 12, **characterised in that** the connector (6, 7, 8, 9) is formed by a housing with a cover (30) and a housing lower part (17), wherein metallic cutting edges (18, 19, 20, 21) are arranged opposite one another in paired manner in the housing lower part (17) in indentations provided relative to the cable receiver and the cutting edges (18, 19, 20, 21) are each in electrical contact with one or more metal connecting members (26, 22), wherein the cutting edges (18), which are connected with the potential distributor, and the connecting member (26) associated therewith are electrically insulated from the or each connecting member (22) of the supply lines (13, 14, 15) and are connected together by way of the protection element (23), and pins are provided in the cover for pressing in the cable between the cutting edges (18, 19, 20, 21).

14. Connector according to one of claims 9 to 13, **characterised in that** the cover (30) and/or the housing lower part (17) is formed from a synthetic material.

15. Connector according to one of claims 9 to 14, **characterised in that** the cover (30) and/or the housing lower part (17) comprises a metallic casing.

16. Connector according to one of claims 9 to 15, **characterised in that** several connecting lines (13, 14, 15) are connectible to each connector (6, 7, 8, 9).

17. Connector according to one of claims 9 to 16, **characterised in that** the connecting lines (13, 14, 15) are protected in the connector (6, 7, 8, 9) individually by individually associated protection elements.

18. Connector according to one of claims 9 to 16, **characterised in that** the connecting lines (13, 14, 15) are protected in the connector (6, 7, 8, 9) in groups by protection elements associated with the group.

19. Connector according to one of claims 9 to 18, **characterised in that** the connecting line or lines (13, 14, 15) is or are similarly connected with the connector (6, 7, 8, 9) by a cutting-clamping device or cutting-clamping devices.

## Revendications

1. Système distributeur de tension pour la distribution de la tension à des consommateurs, qui sont disposés selon une répartition dans un corps, notamment dans un véhicule automobile, où une ligne d'alimentation centrale (5) est posée dans le corps, et où sont prévus des connecteurs (6, 7, 8, 9) pour connecter un consommateur par au moins une ligne de connexion (13, 14, 15) avec la ligne d'alimentation (5), qui sont raccordés au moyen d'un dispositif de serrage à un emplacement pouvant être choisi librement de la ligne d'alimentation (5), **caractérisé en ce que** chaque connecteur (6, 7, 8, 9) présente un élément de sécurité électrique (23) à retour automatique pour le connecteur raccordé.

2. Système distributeur de Lension selon la revendication 1, **caractérisé en ce que** le connecteur (6, 7, 8, 9) est relié à la ligne d'alimentation (5) avec un dispositif de coupe et de serrage.

3. Système distributeur de tension selon la revendication 1 ou 2, **caractérisé en ce que** le dispositif de serrage est de nouveau relâchable.

4. Système distributeur de tension selon la revendication 1, 2 ou 3, **caractérisé en ce que** plusieurs lignes de connexion (13, 14, 15) peuvent être raccordées à respectivement un connecteur (6, 7, 8, 9).

5. Système distributeur de tension selon la revendication 4, **caractérisé en ce que** les lignes de connexion (13, 14, 15) dans le connecteur (6, 7, 8, 9) sont assurées individuellement avec des éléments de sécurité associés individuellement.

6. Système distributeur de tension selon la revendication 4, **caractérisé en ce que** les lignes de connexion (13, 14, 15) dans le connecteur (6, 7, 8, 9) sont assurées en groupes avec des éléments de sécurité associés au groupe.

7. Système distributeur de tension selon l'une ou plusieurs des revendications précédentes, **caractérisé en ce que** la ou les lignes de connexion (13, 14, 15) sont également reliées à un ou des dispositifs de coupe et de serrage avec le connecteur (6, 7, 8, 9).

8. Système distributeur de tension selon l'une ou plusieurs des revendications précédentes, **caractérisé en ce que** plusieurs lignes d'alimentation (5) sont prévues.

9. Connecteur (6, 7, 8, 9) pour la distribution de tension à des consommateurs qui sont disposés selon une répartition dans un corps, notamment un véhicule automobile, où le connecteur (6, 7, 8, 9) est raccordé au moyen d'un dispositif de serrage à un emplacement pouvant être choisi librement d'une ligne d'alimentation (5), **caractérisé en ce que** le connecteur (6, 7, 8, 9) présente un élément de sécurité électrique (23) à retour automatique pour le connecteur raccordé.

10. Connecteur (6, 7, 8, 9) selon la revendication 9, **caractérisé en ce que** celui-ci est relié à la ligne d'alimentation (5) avec un dispositif de coupe et de serrage.

11. Connecteur selon l'une des revendications précédentes 9 ou 10, **caractérisé en ce que** l'élément de sécurité (23) présente un polymère rempli de carbone.

12. Connecteur selon l'une das revendications précédentes 9 à 11, **caractérisé en ce que** l'élément de sécurité est un élément bimétal.

13. Connecteur selon l'une des revendications précédentes 9 à 12, **caractérisé en ce que** le connecteur (6, 7, 8, 9) est constitué par un boîtier avec un couvercle (30) et une partie inférieure de boîtier (17), où sont disposés dans la partie inférieure de boîtier (17) des tranchants métalliques (18, 19, 20, 21) opposés par paires dans des rainures prévues pour la réception des câbles, et les tranchants (18, 19, 20, 21) sont chacun en contact électrique avec une ou plusieurs pièces de connexion métalliques (26, 22), où les tranchants (18) en liaison avec le distributeur de tension et leur pièce de connexion associée (26) sont isolés électriquement de la ou des pièces de connexion (22) des lignes de connexion (13, 14, 15) et sont reliés entre eux par l'élément de sécurité (23) et que sont prévus dans le couvercle des tenons pour enfoncer les câbles entre les tranchants (18, 19, 20, 21).

14. Connecteur selon l'une des revendications précédentes 9 à 13, **caractérisé en ce que** le couvercle (30) et/ou la partie inférieure de boîtier (17) sont réalisés en un matériau de matière synthétique.

15. Connecteur selon l'une des revendications précédentes 9 à 14, **caractérisé en ce que** le couvercle (30) et/ou la partie inférieure de boîtier (17) présentent une gaine métallique.

16. Connecteur selon l'une des revendications précédentes, **caractérisé en ce que** plusieurs lignes de connexion (13, 14, 15) peuvent être raccordées à respectivement un connecteur (6, 7, 8, 9).

17. Connecteur selon l'une des revendications précédentes 9 à 16, **caractérisé en ce que** les lignes de connexion (13, 14, 15) dans le connecteur (6, 7, 8, 9) sont assurées individuellement avec des éléments de sécurité associés individuellement.

18. Connecteur selon l'une des revendications précédentes 9 à 16, **caractérisé en ce que** les lignes de connexion (13, 14, 15) dans le connecteur (6, 7, 8, 9) sont assurées en groupes avec des éléments de sécurité associés au groupe.

19. Connecteur selon l'une des revendications précédentes 9 à 18, **caractérisé en ce que** la ou les lignes de connexion (13, 14, 15) sont reliées également par un ou des dispositifs de coupe et de serrage au connecteur (6, 7, 8, 9).
